Europäisches Patentamt

European Patent Office

Office européen des brevets

(11) Veröffentlichungsnummer: **0 473 808 A1**

## (12) EUROPÄISCHE PATENTANMELDUNG

(21) Anmeldenummer: **90116865.8**

(22) Anmeldetag: **03.09.90**

(51) Int. Cl.5: **G01D 5/249**, G01B 7/10, G01B 21/02

(43) Veröffentlichungstag der Anmeldung:
**11.03.92 Patentblatt 92/11**

(84) Benannte Vertragsstaaten:
**AT BE CH DE DK ES FR GB GR IT LI LU NL SE**

(71) Anmelder: **HOTTINGER BALDWIN MESSTECHNIK GMBH**
**Im Tiefen See 45 Postfach 42 35**
**W-6100 Darmstadt(DE)**

(72) Erfinder: **Geisler, Peter, Dr.**
**Am Löwentor 8**
**W-6100 Darmstadt(DE)**

(74) Vertreter: **Brandt, Ernst-Ulrich**
**Hottinger Baldwin Messtechnik GmbH**
**Patentabteilung Im Tiefen See 45 Postfach 42 35**
**W-6100 Darmstadt(DE)**

(54) Messeinrichtung zur Ermittlung eines Weges oder einer Position.

(57) Es wird eine Meßeinrichtung zur Ermittlung eines Weges oder einer Position mit einem verschiebbar durch eine Detektoreinrichtung (4, 5) geführten Maßstab (1) vorgeschlagen, der Abschnitte mit unterscheidbarem Verhalten aufweist. Um auf einfache und kostengünstige Weise in jedem Betriebszustand eine genaue und absolute Positionsbestimmung durchführen zu können, wird vorgeschlagen, daß einzelne Abschnitte (2, 3) derart zusammengestellt sind, daß jeweils eine begrenzte Anzahl benachbarter Abschnitte (2,3) in codierter Form eine absolute Positionsangabe bildet.

Fig.1

EP 0 473 808 A1

Die Erfindung betrifft eine Meßeinrichtung zur Ermittlung eines Weges oder einer Position nach dem Oberbegriff des Anspruches 1. Ein derartiger Positionsdetektor ist aus der DE 32 05 032 C2 bekannt, wobei sich der Maßstab aus gleichlangen magnetischen und unmagnetischen Abschnitten zusammensetzt, welche abwechselnd hintereinander angeordnet sind. Die bekannte Einrichtung ist lediglich geeignet, die relative Lage eines magnetischen Abschnittes innerhalb der Spule festzustellen. Somit können größere Wege entweder nur inkremental oder durch Anordnung einer parallelen Meßeinrichtung mit gröberen Abschnitten gemessen werden. Zudem sind die bekannten magnetisch absolut messenden Detektoren im Verhältnis zur maximal meßbaren Länge sehr großbauend. Ferner müssen diese Detektoren aufgrund ihres Meßfehlers und da sie keine Maßverkörperung enthalten, vor Inbetriebnahme stets kalibriert werden.

Der Erfindung liegt daher die Aufgabe zugrunde, auf einfache Weise eine gattungsgemäße Meßeinrichtung zu schaffen, mit welcher ein genaues absolutes Messen langer Wege bzw. eine genaue Positionsangabe mit nur einem Maßstab bei gleichzeitig kurzer Baulänge des Detektors möglich ist. Diese Aufgabe wird erfindungsgemäß durch die kennzeichnenden Merkmale des Anspruches 1 gelöst.

Besonders günstig im Hinblick auf eine einfache Signalverarbeitung ist es, wenn nur zwei Arten unterschiedlichen magnetischen Verhaltens vorgesehen sind. Dies kommt insbesondere einer digitalen Signalverarbeitung entgegen, da die codierte Information bereits einer binären Darstellung entspricht. Da der Maßstab eine Maßverkörperung enthält, kann ein aufwendiges Kalibrieren entfallen.

Weitere vorteilhafte Merkmale ergeben sich aus den übrigen Unteransprüchen sowie aus der Beschreibung eines Ausführungsbeispiels der Erfindung anhand der Zeichnung. Hierzu zeigt Figur 1 eine schematische Prinzipdarstellung der erfindungsgemäßen Meßeinrichtung; Figur 2 zeigt den Spannungsamplitudenverlauf der Sekundärspulen als Funktion der relativen Lage zum Maßstab und Figur 3 den Spannungsverlauf der Komparator-Eingänge als Funktion der Zeit.

Die Meßeinrichtung weist einen Maßstab 1 auf, der sich aus magnetischen Abschnitten 2 und nicht magnetischen Abschnitten 3 zusammensetzt und der längs verschiebbar durch eine Spuleneinrichtung geführt ist. Die Spuleneinrichtung setzt sich aus einer mit Wechselstrom gespeisten Primärspule 4 und den Sekundärspulengruppen 5 zusammen. Jede Sekundärspulengruppe enthält drei Einzelspulen. Entlang der Längsachse der Primärspule 4, welche den Maßstab 1 koaxial umgibt, sind ebenfalls koaxial die Sekundärspulengruppen 5 angeordnet, wobei der Abstand 6 von Spulenmittelebene zu Spulenmittelebene stets gleich ist.

Die magnetischen Abschnitte 2 und die unmagnetischen Abschnitte 3 des Maßstabes treten in ständigem Wechsel auf. Die magnetischen Abschnitte 2 haben stets die gleiche Länge, während die unmagnetischen Abschnitte 3 in zwei unterschiedlichen Längen auftreten. Der bereits genannte Abstand 6 der Sekundärspulenteilung ergibt sich aus der mittleren Periodenlänge des Maßstabs, also der Summe aus den mittleren Länge eines unmagnetischen Abschnitts 3 und eines magnetischen Abschnittes 2.

Durch die Wechselspannung der Primärspule 4 werden in den Sekundärspulen Spannungen induziert, deren Amplitude außer durch die geometrischen Verhältnisse im wesentlichen durch die Permeabilität der Spulenkerne bestimmt wird. Durch die später näher beschriebene Analyse der induzierten Spannungssignale der Sekundärspulen läßt sich also detektieren, welche Folge von langen bzw. kurzen unmagnetischen Abschnitten 3 sich innerhalb der Spuleneinrichtung befindet. Die einzelnen unmagnetischen Abschnitte 3 sind nach dem Prinzip der "Pseudo-Zufallsfolgen" angeordet, sodaß eine bestimmte Kombination von benachbarten, d. h. nur durch einen magnetischen Abschnitt 2 getrennten, unmagnetischen Abschnittslängen auf dem gesamten Maßstab nur ein einziges Mal auftritt, wodurch - bei Kenntnis dieser Kombination - eine eindeutige grobe Positionsbestimmung möglich ist.

Die Einrichtungen sowie das Verfahren zur Signalauswertung wird nun am Beispiel der beiden benachbarten Sekundärspulengruppen 5a und 5b näher erläutert.

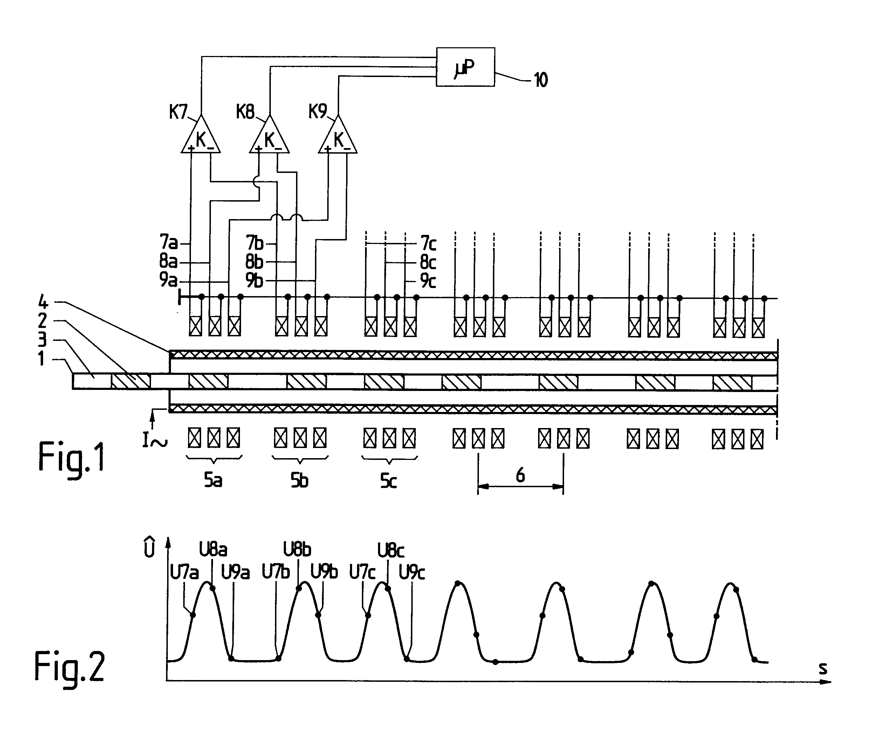

Wenn sich der Maßstab 1 in der in Figur 1 dargestellten Position befindet, wird durch die Primärspule 4 in den Sekundärspulen 5 ein Spannungsverlauf erzeugt, dessen Amplituden in Figur 2 als Funktion der Spulenlage relativ zum Maßstab dargestellt sind. Der Amplitudenverlauf innerhalb einer Sekundärspule hängt somit von der momentanen Lage des magnetischen Abschnittes 2 relativ zur Spule ab. An den Einzelspulen sind Leitungen 7, 8, 9 angeschlossen, die zu einem Eingang jeweils eines Komparators K führen. Der andere Eingang des Komparators ist mit der entsprechenden Leitung der Nachbarspulengruppe verbunden. Jeder Komparatorausgang ist mit dem Mikroprozessor 10 verbunden. Eine weitere (der Übersichtlichkeit halber nicht dargestellte) Einrichtung, bestehend aus drei Spitzenwertgleichrichtern mit nachgeschalteten A/D-Wandlern, bestimmt die Amplitude der drei Spannungen U7a, U8a und U9a an den Spulenausgängen 7a, 8a und 9a. Die Ausgänge dieser Einheit sind ebenfalls mit dem Mikroprozessor 10 verbunden.

Die Bestimmung der genauen Position des Maßstabes 1 relativ zur Spuleinrichtung erfolgt nach folgendem Verfahren: Zunächst werden in der Sekundärspulegruppe 5a die in den Leitungen 7a, 8a, 9a herrschenden Spannungsamplituden U7a, U8a, U9a gemessen. Durch eine einfache Rechenoperation läßt sich aus diesen Werten schließen, welcher Spannungswert auf einer Flanke des in etwa gaußförmigen Spannungsverlaufs liegt. Außerdem läßt sich bestimmen, ob sich dieser Wert auf der linken oder rechten Flanke befindet. Die so ermittelte Spannung U7a, U8a bzw. U9a ist über die zugehörige Leitung 7a, 8a bzw. 9a auf den Komparator K7, K8 bzw. K9 geführt. Im dargestellten Ausführungsbeispiel ist dies der Komparator K7.

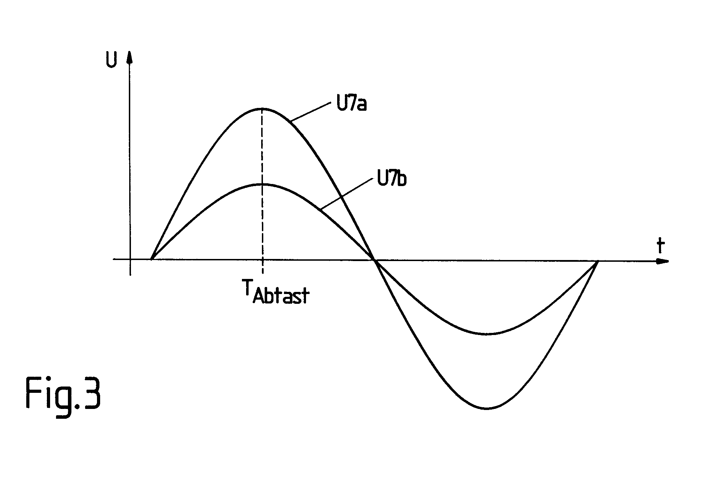

Der Spannungs-Zeit-Verlauf seiner beiden Eingangsspannungen U7a und U7b ist in Figur 3 wiedergegeben. Ist nun U7a zum Abtastzeitpunkt $T_{Abtast}$ größer als U7b, so erscheint zu diesem Zeitpunkt ein High-Spannungspegel. Dies entspricht einem langen nichtmagnetischen Abschnitt 3 zwischen den magnetischen Abschnitten 2, die sich in den Sekundärspulengruppen 5a und 5b befinden. Ist U7a zum Abtastzeitpunkt kleiner als U7b, so ergibt sich ein Low-Spannungspegel (kurzer nichtmagnetischer Abschnitt).

Mit Hilfe der Kenntnis der so ermittelten Länge des zwischen den Sekundärspulengruppen 5a und 5b liegenden unmagnetischen Abschnittes und des aus Figur 2 bekannten Verlaufs der Spannungsamplituden kann gefolgert werden, daß der Spannungsamplitudenwert U9b der Sekundärspulengruppe 5b auf einer rechten Flanke in Figur 2 liegt. Hierzu muß in der Sekundärspulengruppe 5b kein Spannungswert der Leitungen 7b, 8b und 9b gemessen werden.

Zur Bestimmung der Länge des nicht magnetischen Abschnitts zwischen der Sekundärspulengruppe 5b und der Sekundärspulengruppe 5c wird nun mittels eines weiteren (nicht dargestellten) Komparators der Spannungsamplitudenwert U9b mit dem Wert U9c verglichen, der an der Leitung 9c anliegt. Da die Spannungsamplitude U9b auf der rechten Flanke liegt, muß das Ausgangssignal des (nicht dargestellten) Komparators invertiert werden. Ist wie im Beispiel U9c kleiner als U9b, so liegt zwischen den Sekundärspulen 5b und 5c ein kurzer nichtmagnetischer Abschnitt; bei langem nicht magnetischem Abstand zwischen diesen beiden Spulen wäre U9c größer als U9b. Die Auswertung der weiteren Längen (im Ausführungsbeispiel sind es noch vier) der unmagnetischen Abschnitte 3 erfolgt entsprechend. Der Mikroprozessor 10 kann aufgrund dieser 6 Bit-Information die grobe Bestimmung der Position vornehmen. Zur Feinmessung der Position wird nun ein Spannungsamplitudenwert U7a, U8a bzw. U9a benutzt, wodurch sich sehr genau das bislang nur grobbestimmte Maß der Relativlage von Maßstab zur Spuleneinrichtung angeben läßt. Somit ist mit extrem wenigen elektrischen Bauteilen die Position des Maßstabes 1 relativ zur Spuleneinrichtung erfaßt.

Eine nicht dargestellte Ausführungsform der Erfindung sieht vor, daß die Wicklungen der Sekundärspulengruppen 5 und/oder die Leitungen 7, 8 und 9 ebenso wie die Komperatorschaltungen K auf eine Folie aufgebracht sind, welche dann um die Primärspule 4 gewickelt wird. Dadurch wird eine besonders einfache Herstellungsweise erreicht.

**Patentansprüche**

1. Meßeinrichtung zur Ermittlung eines Weges oder einer Position mit einem verschiebbar durch eine Detektoreinrichtung geführten Maßstab, der Abschnitte mit unterscheidbarem Verhalten aufweist, dadurch gekennzeichnet, daß einzelne Abschnitte derart zusammengestellt sind, daß jeweils eine begrenzte Anzahl benachbarter Abschnitte (2, 3) in codierter Form eine absolute Positionsangabe bildet.

2. Meßeinrichtung nach Anspruch 1, dadurch gekennzeichnet, daß zwei unterschiedliche Arten unterscheidbaren Verhaltens vorgesehen sind.

3. Meßeinrichtung nach einem der vorhergehenden Ansprüche, dadurch gekennzeichnet, daß die Codierung durch Anordnen der Abschnitte (2, 3) nach dem Prinzip der "Pseudo-Zufallsfolgen" erfolgt.

4. Meßeinrichtung nach einem der vorhergehenden Ansprüche, dadurch gekennzeichnet, daß die Detektoreinrichtung als Spuleneinrichtung (4, 5) ausgeführt ist und daß die Abschnitte (2, 3) des Maßstabes (1) unterschiedliches magnetisches Verhalten aufweisen.

5. Meßeinrichtung nach einem der vorhergehenden Ansprüche, dadurch gekennzeichnet, daß der Maßstab (1) aus ferromagnetischem Werkstoff ausgeführt und mit Ausnehmungen, insbesondere Ringnuten, versehen ist.

6. Meßeinrichtung nach einem der Ansprüche 1-4, dadurch gekennzeichnet, daß der Maßstab (1) elektrisch leitende Kurzschlußringe trägt.

7. Meßeinrichtung nach einem der Ansprüche 1 bis 4, dadurch gekennzeichnet, daß der Maßstab (1) aus magnetisierbaren und nichtmagnetisierbaren Abschnitten (2, 3) zusammengesetzt ist.

**8.** Meßeinrichtung nach einem der Ansprüche 1 bis 3, dadurch gekennzeichnet, daß der Maßstab (1) aus dauermagnetischen und nichtmagnetischen Abschnitten (2, 3) zusammengesetzt ist.

**9.** Meßeinrichtung nach einem der vorhergehenden Ansprüche, dadurch gekennzeichnet, daß jeweils Abschnitte (2) einer bestimmten magnetischen Eigenschaft mit konstanter Länge ausgeführt sind, während die Abschnitte (3) mit anderem magnetischen Verhalten in mindestens zwei verschiedenen Längen vorgesehen sind.

**10.** Meßeinrichtung nach einem der vorhergehenden Ansprüche, dadurch gekennzeichnet, daß sich die Spuleneinrichtung aus einer wechselstromgespeisten Primärspule (4) und mehreren axial hintereinander angeordneten Sekundärspulen (5) zusammensetzt, deren induzierte Spannung einer Auswerteeinrichtung zugeführt wird.

**11.** Meßeinrichtung nach einem der Ansprüche 1 bis 3, dadurch gekennzeichnet, daß die Detektoreinrichtung als kapazitive Einrichtung ausgeführt ist.

**12.** Meßeinrichtung nach einem der Ansprüche 1 bis 3, dadurch gekennzeichnet, daß die Detektoreinrichtung als optischer Aufnehmer ausgeführt ist.

**Fig.1**

**Fig.2**

Fig.3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 078 892 (DR. JOHANNES HEIDENHAIN GMBH) * Seiten 3-8 * | 1,2 | G 01 D 5/249 G 01 B 7/10 |
| Y | | 3-10,12 | G 01 B 21/02 |
| Y | PATENT ABSTRACTS OF JAPAN Band 10, Nr. 190 (P-474)(2246), 4. Juli 1986; & JP - A - 6135308 (OMRON TATEISI ELECTRONICS CO.) 19.02.1986 | 3,12 | |
| Y | DE-A-3 014 137 (ROBERT BOSCH GMBH) * Ansprüche 1-16 * | 4,6 | |
| Y | US-A-3 237 189 (C.J. WAYMAN) * Spalte 1 * | 5 | |
| Y | EP-A-0 028 971 (S.N.E.C.M.A.) * Seiten 5,6 * | 7,8,10 | |
| Y | US-A-4 297 698 (M.A. PAUWELS et al.) * Ansprüche 1-38 * | 9 | |
| A | EP-A-0 039 921 (TOKYO KOGAKU KIKAI K.K.) * Ansprüche 1-7 * | 12 | **RECHERCHIERTE SACHGEBIETE (Int. Cl.5)** |
| A | DE-A-3 711 062 (H. LEYPOLD) * Anspruch 1 * | 11 | G 01 B 7/00 G 01 B 21/00 G 01 D 5/00 |
| A | DE-A-3 235 033 (RHEOMETRON AG) * Anspruch 1 * | 10 | |
| A | I.E.E.E. TRANSACTIONS ON INSTRUMENTATION & MEASUREMENT Band IM-36, Nr. 4, Dezember 1987, Seiten 950-955, New York, NY, US; E.M. PETRIU: "Absolute-type Position Transducers Using a Pseudorandom Encoding" * Paragraph II. * | 3 | |

Der vorliegende Recherchenbericht wurde für alle Patentansprüche erstellt

| Recherchenort | Abschlußdatum der Recherche | Prüfer |
|---|---|---|
| Berlin | 02 Mai 91 | DIETRICH A. |